# EUROPEAN PATENT SPECIFICATION

(11) **EP 3 068 835 B1**
(45) Date of publication and mention of the grant of the patent: **07.08.2019**
(21) Application number: 14861996.8
(22) Date of filing: 12.11.2014
(51) Int. Cl.: C08L 27/06, C08K 5/12, C08J 9/04, C08J 5/00

(54) **VINYL CHLORIDE BASED RESIN COMPOSITION**
AUF VINYLCHLORID BASIERENDE HARZZUSAMMENSETZUNG
COMPOSITION DE RÉSINE À BASE DE CHLORURE DE VINYLE

(30) Priority: 15.11.2013 KR 20130139261
(43) Date of publication of application: 21.09.2016
(73) Proprietor: Hanwha Chemical Corporation, Seoul 100-797 (KR)
(72) Inventor: KIM, Jae Song, Daejeon 305-750 (KR); JANG, Yeon Su, Daejeon 302-243 (KR); SIM, Ki Jo, Daejeon 305-721 (KR); KIM, YEO Jin, Seoul 140-764 (KR); JANG, Taeyoung, Namwon-si Jeollabuk-do 590-040 (KR)
(74) Representative: Behr, Wolfgang
(86) International application number: PCT/KR2014/010848
(87) International publication number: WO 2015/072741

(56) References cited:
- CN-A- 101 798 428
- KR-A- 20080 105 341
- KR-A- 20120 083 560
- KR-B1- 100 962 985
- DATABASE WPI Week 200932 Thomson Scientific, London, GB; AN 2009-E25076 XP002770032, -& CN 101 338 171 A (GUIZHOU COMPOSITE MODIFIED POLYMER MATER) 7 January 2009 (2009-01-07)

## Description

### [Technical Field]

The present invention relates to a vinyl chloride based resin composition, and more particularly, to a vinyl chloride based resin composition capable of implementing excellent gelling properties, low-temperature properties, heat stability, ultraviolet (UV) stability, weather resistance, and long term reliability.

### [Background Art]

A vinyl chloride based resin, which is an interpolymer containing a vinyl chloride homopolymer and vinyl chloride at a content of 50% or more, is one of the five major thermoplastic resins prepared by suspension polymerization and emulsion polymerization. A polyvinyl chloride resin prepared by emulsion polymerization is mixed with a plasticizer, a stabilizer, a filler, a blowing agent, a pigment, a viscosity depressant, titanium dioxide (TiO₂), and a sub-material having a specific function to be used in a plastisol form in various fields such as a floor material, wall paper, tarpaulin, artificial leathers, toys, a coating material for an under body of a vehicle, or the like, through a coating forming method or mold forming method. Since most of the products using the vinyl chloride based resin are easily exposed to the human body, making an environmental product for humans has increased. Particularly, the products using the vinyl chloride based resin contain a plasticizer added due to a manufacturing process, for example, a phthalate based plasticizer such as di-2-ethylhexyl phthalate (DEHP), such that the products have been suspected as environmental hormones, that is, endocrine disrupters inhibiting or disrupting hormone action in the human body. Therefore, the phthalate based plasticizer has been partially replaced with dioctyl terephthalate (DOTP), or the like, which is a non-phthalate based plasticizer.

The case of using DOTP, which is the non-phthalate based plasticizer, alone or using a mixture of DOPT and di-isononyl phthalate (DINP) has been disclosed in Korean Patent Laid-Open Publication No. 2008-0105341. In this case, a blowing property is deteriorated due to deterioration of gelling properties, a viscosity depressant should be added due to an increase in viscosity at a low temperature, various stabilizers should be added due to deterioration of weather resistance, such that there are problems in that at the time of manufacturing a processed product, physical properties may be deteriorated, compatibility may be deteriorated by using the additives, and cost may be increased.

CN101338171A shows a polyvinyl chloride bottle cap sealant, comprising 90-110, preferably 100 parts by weight PVC resin, 40-50, preferably 45 parts by weight dioctyl terephthalate, and 20-30, preferably 25 parts by weight acetyl tributyl citrate.

### [Disclosure]

### [Technical Problem]

An object of the present invention is to provide a vinyl chloride based resin composition capable of improving a viscosity property at a low temperature.

Another object of the present invention is to provide a vinyl chloride based resin composition capable of increasing a gelling rate and having an excellent blowing property.

Another object of the present invention is to provide a vinyl chloride based resin composition capable of having excellent heat stability, UV stability, weather resistance, and long-term reliability.

Another object of the present invention is to provide a molded product containing a vinyl chloride based resin composition capable of having excellent low-temperature properties, weather resistance, and long-term reliability to thereby be used for wall paper.

### [Technical Solution]

The present invention provides a use of a vinyl chloride based resin composition according to claim 1 and a wall paper according to claim 8.

In one general aspect, a vinyl chloride based resin composition containing a vinyl chloride resin and 30 to 120 parts by weight of a mixture of acetyl tributyl citrate and dioctyl terephthalate, based on 100 parts by weight of the vinyl chloride resin, is used for wallpaper.

A mixing weight ratio of the mixture of acetyl tributyl citrate and dioctyl terephthalate is such that the content of the acetyl tributyl citrate is 50 to 75wt% in the mixture.

The vinyl chloride based resin composition further contains 0.5 to 5 parts by weight of blowing agent.

The vinyl chloride based resin composition may further contain any one or a mixture of two or more compounds selected from a stabilizer, a filler, and titanium dioxide. As the stabilizer, any one or a mixture of two or more selected from the group consisting of Ca-Zn based compounds, K-Zn based compounds, Ba-Zn based compounds, organic tin based compounds, metallic soap based compounds, phenolic compounds, phosphoric acid ester based compounds, or phosphorous acid ester based compounds may be used.

As the blowing agent, any one selected from a chemical blowing agent, a physical blowing agent, or a mixture thereof may be used.

As the filler, any one or a mixture of two or more selected from the group consisting of calcium carbonate, talc, titanium dioxide, kaolin, silica, alumina, magnesium hydroxide, or clay may be used.

A low-temperature viscosity (CPS, -20°C) of the resin composition may be less than 75,000.

A low-temperature viscosity change with time of the resin composition may be less than 15.

In another general aspect, there is provided a wall paper prepared using the vinyl chloride based resin composition as described above.

### [Advantageous Effects]

Since a vinyl chloride based resin composition used according to the present invention uses a non-phthalate based plasticizer, the vinyl chloride based resin composition has an eco-friendly advantage. In addition, according to the present invention, generation of volatile organic compounds (VOCs) may be decreased.

Further, the vinyl chloride based resin composition used according to the present invention may have significantly excellent initial viscosity and low-temperature viscosity properties, and a low low-temperature viscosity change with time.

In addition, the vinyl chloride based resin composition used according to the present invention may have excellent heat stability, UV stability, weather resistance, and long-term reliability.

Furthermore, the vinyl chloride based resin composition used according to the present invention may have excellent blowing property and whiteness and a rapid gelling rate.

### [Description of Drawings]

The above and other objects, features and advantages of the present invention will become apparent from the following description of preferred embodiments given in conjunction with the accompanying drawings, in which:
FIG. 1 is a view comparing freezing properties of plasticizers (dioctyl terephthalate (DOTP), acetyl tributyl citrate (ATBC), and DOTP/ATBC) during winter.
FIG. 2 is a view comparing gelling rates of the plasticizers (DOTP, ATBC, DOTP/ATBC).
FIG. 3 is a view comparing UV stability of the plasticizers (DOTP, ATBC, DOTP/ATBC (Example 2)).

### [Best Mode]

Hereinafter, a vinyl chloride based resin composition used according to the present invention will be described in detail. The exemplary embodiments of the present invention to be described below are provided by way of example so that the idea of the present invention can be sufficiently transferred to those skilled in the art to which the present invention pertains. In addition, technical terms and scientific terms used in the present specification have the general meaning understood by those skilled in the art to which the present invention pertains unless otherwise defined, and a description for the known function and configuration obscuring the present invention will be omitted in the following description.

The present inventors found that at the time of using dioctyl terephthalate (DOTP), which is a non-phthalate based plasticizer, a gelling rate may be increased, an excellent blowing property may be implemented, and whiteness, heat stability, UV stability, low-temperature properties, and weather resistance may be improved by simultaneously using DOTP and acetyl tributyl citrate (ATBC), thereby completing the present invention.

The vinyl chloride based resin used according to the present invention may significantly improve the low-temperature properties by using a mixture of acetyl tributyl citrate (ATBC) and dioctyl terephthalate (DOTP) as a plasticizer. Particularly, a low-temperature viscosity is decreased, such that an excellent coating property may be implemented even at a low temperature in winter, or the like, which may significantly improve workability and productivity and be advantageous in economic view. In addition, the blowing property may be excellent, and generation of volatile organic compounds may be minimized, such that the vinyl chloride based resin composition used according to the present invention is not harmful to the human body and has an eco-friendly advantage.

The mixture of acetyl tributyl citrate (ATBC) and dioctyl terephthalate (DOTP) used as the plasticizer in the present invention may be contained at a content of 30 to 120 parts by weight, preferably 50 to 120 parts by weight, and more preferably 70 to 90 parts by weight, based on 100 parts by weight of a vinyl chloride based resin. When the content of the plasticizer is less than 30 parts by weight, a viscosity of plastisol is excessively high, such that the coating property may be deteriorated or flexibility of a molded product may be deteriorated, and in the case in which the content is more than 120 parts by weight, a bleeding effect (a phenomenon that the plasticizer bleeds onto a surface of a molded product) may be easily generated, and there may be problems in a processing process or a final product due to a tacky property of the surface.

In order to maximize low-temperature properties such as the low-temperature viscosity, a freezing property, and a low-temperature viscosity change with time, the content of the acetyl tributyl citrate in the plasticizer mixture is used at a content of 50 to 75wt%.

The vinyl chloride based resin composition used according to the present invention may further contain any one or a mixture of two or more selected from a stabilizer, a blowing agent, a filler, and titanium dioxide, but is not particularly limited thereto.

In this case, the additive may be appropriately selected depending on physical properties according to use.

As an example, the vinyl chloride based resin used according to the present invention may selectively contain 0.5 to 7 parts by weight of the stabilizer, 0.5 to 5 parts by weight of the blowing agent, 30 to 150 parts by weight of the filler, or 1 to 20 parts by weight of titanium dioxide (Ti02) in the vinyl chloride based resin composition.

The stabilizer may be added to the resin composition in order to prevent various physical property changes generated due to HCl that is separated from polyvinyl chloride to form a polyene structure, which is a chromophore, and then generates a cutting and cross-linking phenomenon in a main chain. Examples of the stabilizer may include Ca-Zn based compounds; Ba-Zn based compounds; organic tin based compounds such as mercaptide based compounds, maleic acid based compounds, or carboxylic acid based compounds; metallic soap based compounds such as Mg-stearate, Ca-stearate, Pb-stearate, Cd-stearate, Ba-stearate, or the like; phenolic compounds; phosphoric acid ester based compounds; phosphorous acid ester based compounds, and the like, and the stabilizer may be selectively used according to the use. In the present invention, the Ca-Zn based compounds, and preferably, Ca-Zn based composite organic compounds may be used.

In the vinyl chloride based resin composition used according to the present invention, the stabilizer may be used at a content of preferably 0.5 to 7 parts by weight, and more preferably 1 to 4 parts by weight based on 100 parts by weight of the vinyl chloride based resin. In the case in which the content of the contained stabilizer is less than 0.5 parts by weight, heat stability may be deteriorated, and in the case in which the content is more than 7 parts by weight, heat stability may be excessively expressed.

As the blowing agent, a chemical blowing agent or physical blowing agent may be used alone or a mixture thereof may be used. As the chemical blowing agent, any compound may be used without limitations as long as the compound may be decomposed at a specific temperature or more to generate gas, and examples thereof may include azodicarbonamide, azodiisobutyro-nitrile, benzenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, trihydrazino triazine, and the like. In addition, the example of the chemical blowing agent may include sodium bicarbonate, potassium bicarbonate, ammonium bicarbonate, sodium carbonate, ammonium carbonate, and the like.

Further, examples of the physical blowing agent may include inorganic blowing agents such as carbon dioxide, nitrogen, argon, water, air, helium, and the like, or organic blowing agents such as aliphatic hydrocarbons containing 1 to 9 carbon atoms, aliphatic alcohols containing 1 to 3 carbon atoms, and halogenated aliphatic hydrocarbons containing 1 to 4 carbon atoms, and the like. Specific examples of the above-mentioned compounds may be as follows: Examples of the aliphatic hydrocarbons may include methane, ethane, propane, normal butane, isobutane, normal pentane, isopentane, neopentane, and the like, examples of the aliphatic alcohols may include methanol, ethanol, normal propanol, isopropanol, and the like, and examples of the halogenated aliphatic hydrocarbons may include methyl fluoride, perfluoromethane, ethyl fluoride, 1,1-difluoroethane (HFC-152a), 1,1,1-trifluoroethane (HFC-143a), 1,1,1,2-tetrafluoroethane (HFC-134a), 1,1,2,2-tetrafluoroethane (HFC-134), 1,1,1,3,3-pentafluorobutane (HFC-365mfc), 1,1,1,3,3-pentafluoropropane (HFC.sub.13 245fa), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, methyl chloride, methylene chloride, ethyl chloride, 1,1,1-trichloroethane, 1,1-dichloro-1-fluoroethane, (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, dichlorohexafluoropropane, and the like.

A content of the blowing agent is 0.5 to 5 parts by weight based on 100 parts by weight of the vinyl chloride based resin. In the case in which the content of the blowing agent is less than 0.5 parts by weight, an amount of generated gas for blowing is excessively small, such that a blowing effect may be insufficient or may not be obtained, and in the case in which the content is more than 5 parts by weight, the amount of generated gas is excessively large, such that it may be difficult to expect to obtain the desired physical property.

Productivity and dry touch of the vinyl chloride based resin composition may be improved by adding the filler to the composition used according to the present invention.

Examples of the filler may include calcium carbonate, clay, talc, diatomite, titanium dioxide, kaolin, silica, alumina, magnesium hydroxide, or the like, but the filler is not necessarily limited thereto. Preferably, 30 to 150 parts by weight, more preferably 50 to 130 parts by weight of the filler may be used, based on 100 parts by weight of the vinyl chloride based resin. In the case in which the content of the contained filler is less than 50 parts by weight, dimensional stability and economical efficiency may be deteriorated, and in the case in which the content is more than 130 parts by weight, a blowing surface may not be good, and processability may be deteriorated.

Whiteness and a hiding property of the vinyl chloride based resin composition may be improved by adding titanium dioxide (TiO2) to the composition used according to the present invention. A content of the contained titanium dioxide in the vinyl chloride based resin composition may be preferably 1 to 20 parts by weight, more preferably 3 to 15 parts by weight, based on 100 parts by weight of the vinyl chloride based resin. In the case in which the content of the contained titanium dioxide is less than 3 parts by weight, the whiteness and hiding property may be deteriorated, such that after printing, colors may not be implemented as desired, and in the case in which the content is more than 15 parts by weight, the blowing surface may be deteriorated.

A low-temperature viscosity (CPS, -20°C) of the vinyl chloride based resin composition used according to the present invention may be less than 75,000. More preferably, the low-temperature viscosity (CPS, -20°C) may be 65,000 or less.

In the vinyl chloride based resin composition used according to the present invention, a low-temperature viscosity change with the passage of the time may be less than 15. Also disclosed is a molded product prepared using the above-mentioned resin composition.

The molded product may have excellent heat stability, UV stability, and weather resistance and secure long-term reliability. Particularly, the molded product has excellent viscosity and freezing properties at a low temperature, such that the molded product may be applied to a field requiring low-temperature properties.

The molded product may be utilized for any one use selected from wall paper, floor materials, tarpaulin, and artificial leathers.

As an aspect of the present invention, a vinyl chloride based resin composition for wall paper has significantly excellent low-temperature viscosity change properties with time, such that there is no need to add additives such as the viscosity depressant, and accordingly, volatile organic compounds (VOCs) due to the additive such as the viscosity depressant are not emitted. Therefore, the vinyl chloride based resin composition for wall paper may not be harmful to the human body but have an eco-friendly advantage.

The present invention will be described in detail by Examples.

However, the following Examples are to illustrate the present invention, and the scope of the present invention is not limited to the following Examples.

### (Evaluation)

### (1) Viscosity Measurement

After prepared plastisol was left in a constant temperature oven at 25°C for 1 hour, an initial viscosity of the plastisol was measured using a Brookfield viscometer (spindle #6, 20, 5 RPM). In addition, the prepared plastisol was stored in a refrigerator at -20°C, and then a viscosity thereof was measured. A low-temperature viscosity change with time means a degree of change in the viscosity after 1 day at -20°C.

### (2) Blowing surface and blowing cell measurement

A blowing property is the most important in blowing products. The blowing property means a surface of the product, a size of a blowing cell, and uniformity of the cell. Plastisol according to the present invention was coated onto paper at a thickness of 0.2mm using an applicator and then heated in an oven at 220°C for 40 seconds to perform the blowing, thereby manufacturing a blowing sheet. The surface state of the blowing sheet manufactured as described above was observed by the naked eyes, and the blowing cells were photographed and observed using an electron microscope. The results were represented by the following symbols.
(Very excellent) ⊚ > ○ > Δ > X (very poor)

### (3) Whiteness Measurement

The whiteness of the blowing sheet, which is a main factor indicating definition of color during a color matching process, was measured using a colorimeter and then arithmetically expressed.

### (4) Heat Stability Measurement

After plastisol was coated onto paper at a thickness of 0.2mm using an applicator and then heated in an oven at 220°C for 80 seconds, observation was performed at a timing point at which the yellowing starts, and the heat stability was compared through relative comparison. The heat stability was classified according to the following standard.
(Very excellent) ⊚ > ○ > Δ > X (very poor)

### (5) Freezing Property Evaluation

After dioctyl terephthalate (DOTP), acetyl tributyl citrate (ATBC), and dioctyl terephthalate/acetyl tributyl citrate (DOTP/ATBC) used as the plasticizers were injected into a 50ml vial and left at -20°C for 4 hours, the plasticizers were picked out, and an appearance thereof was observed by the naked eyes.

### (6) Gelling Rate Measurement

A gelling rate of the prepared plastisol was measured at 110°C using a SVNC equipment. As the gelling progressed in the SVNC equipment, an amplitude was reduced. The gelling rate was compared and measured using a rate of reducing this value.

### (7) UV Stability Evaluation

After blowing the prepared plastisol by heating at 220°C for 30 seconds, the blown plastisol was cut at a size suitable for a UV test and put into a UV con, thereby comparing UV stability. UV stability was compared by measuring a degree of discoloration and whiteness.

### (Comparative example 1)

Based on 100 parts by weight of a vinyl chloride resin, 80 parts by weight of dioctyl terephthalate as a plasticizer, 3 parts by weight of a stabilizer (KKZ102PF, Woochang Chem. Co.), 3 parts by weight of a blowing agent (DWPX03, Dongjin Semichem), 10 parts by weight of a viscosity depressant (V5125, BYK Corp.), 10 parts by weight of TiO2 (R902, DuPont Corp.), and 100 parts by weight of a filler (OM-10, Omya Korea) were mixed in a Mathis mixer for 10 minutes to thereby prepare a plastisol. Then, physical properties were evaluated by the measuring methods as described above, and the results were shown in Table 1.

### (Comparative example 2)

Based on 100 parts by weight of a vinyl chloride resin, 80 parts by weight of acetyl tributyl citrate as a plasticizer, 3 parts by weight of a stabilizer (KKZ102PF, Woochang Chem. Co.), 3 parts by weight of a blowing agent (DWPX03, Dongjin Semichem), 10 parts by weight of a viscosity depressant (V5125, BYK Corp.), 10 parts by weight of Ti02 (R902, DuPont Corp.), and 100 parts by weight of a filler (OM-10, Omya Korea) were mixed in a Mathis mixer for 10 minutes to thereby prepare a plastisol. Then, physical properties were evaluated by the measuring methods as described above, and the results were shown in Table 1.

### (Example 1) (not claimed)

Based on 100 parts by weight of a vinyl chloride resin, 70 parts by weight of dioctyl terephthalate and 10 parts by weight of acetyl tributyl citrate as plasticizers, 3 parts by weight of a stabilizer (KKZ102PF, Woochang Chem. Co.), 3 parts by weight of a blowing agent (DWPX03, Dongjin Semichem), 10 parts by weight of a viscosity depressant (V5125, BYK Corp.), 10 parts by weight of TiO2 (R902, DuPont Corp.), and 100 parts by weight of a filler (OM-10, Omya Korea) were mixed in a Mathis mixer for 10 minutes to thereby prepare a plastisol. Then, physical properties were evaluated by the measuring methods as described above, and the results were shown in Table 1.

### (Example 2) (not claimed)

A plastisol was prepared by the same method as that in Example 1 except for using 60 parts by weight of dioctyl terephthalate and 20 parts by weight of acetyl tributyl citrate as the plasticizers, and the results were shown in Table 1.

### (Example 3) (not claimed)

A plastisol was prepared by the same method as that in Example 1 except for using 50 parts by weight of dioctyl terephthalate and 30 parts by weight of acetyl tributyl citrate as the plasticizers, and the results were shown in Table 1.

### (Example 4)

A plastisol was prepared by the same method as that in Example 1 except for using 40 parts by weight of dioctyl terephthalate and 40 parts by weight of acetyl tributyl citrate as the plasticizers, and the results were shown in Table 1.

### (Example 5)

A plastisol was prepared by the same method as that in Example 1 except for using 30 parts by weight of dioctyl terephthalate and 50 parts by weight of acetyl tributyl citrate as the plasticizers, and the results were shown in Table 1.

### (Example 6)

A plastisol was prepared by the same method as that in Example 1 except for using 20 parts by weight of dioctyl terephthalate and 60 parts by weight of acetyl tributyl citrate as the plasticizers, and the results were shown in Table 1.

### (Example 7) (not claimed)

A plastisol was prepared by the same method as that in Example 1 except for using 10 parts by weight of dioctyl terephthalate and 70 parts by weight of acetyl tributyl citrate as the plasticizers, and the results were shown in Table 1.

**[Table 1]**

| | Comparative Example 1 | Comparative Example 2 | Example 1 | Example 2 | Example 3 | Example 4 | Example 5 | Example 6 | Example 7 |
|---|---|---|---|---|---|---|---|---|---|
| Initial Viscosity (CPS) | 2,900 | 3,100 | 2,550 | 2,600 | 2,450 | 2,600 | 2,750 | 2,800 | 2,850 |
| Low-Temperature Viscosity (CPS, -20°C) | 78,200 | 93,000 | 73,200 | 63,200 | 65,000 | 60,400 | 60,200 | 59,600 | 69,000 |
| Low-Temperature Viscosity Change with Time (1 day) | 19.55 | 15.00 | 19.26 | 16.63 | 14.77 | 13.13 | 11.58 | 11.46 | 11.90 |
| Gelling Rate (Ranking) | 9 | 1 | 8 | 7 | 6 | 5 | 4 | 3 | 2 |
| UV Stability (Ranking) | 9 | 1 | 8 | 7 | 6 | 5 | 4 | 3 | 2 |
| Blowing Property | ○ | x | ○ | ○ | ○ | ○ | Δ | Δ | Δ |
| Heat Stability | ○ | ○ | ○ | ○ | ○ | ○ | ○ | ○ | ○ |
| Whiteness | ○ | ○ | ○ | ○ | ○ | ○ | ○ | ○ | ○ |

As the result of comparing the viscosity of the plastisol prepared using 80phr of the plasticizer, viscosities of the resin compositions using the mixture (DOTP/ATBC blend) of DOTP and ATBC according to Examples 1 to 7 as the plasticizer were lower than those of the resin compositions in Comparative Examples 1 and 2 in which DOTP or ATBC was used alone, as shown in Table 1. That is, it may be confirmed that the case of using the mixture of DOTP and ATBC was advantageous in view of the viscosity as compared to the case of using DOTP or ATBC alone. Further, as the result of measuring the viscosities at a low temperature (-20°C), the viscosity in Examples 1 to 7 were lower than those in Comparative Examples 1 and 2. When an atmospheric temperature decreases in winter, a viscosity of a plasticizer increases, such that there is a need to add an excessive amount of a liquid state viscosity depressant in order to decrease the viscosity, which may cause an increase in cost and generate volatile organic compounds (VOCs). However, the resin composition according to the present has low viscosity at a low temperature, thereby making it possible to solve the above-mentioned problem. Particularly, in Examples 4 to 6 using the plasticizer in which the content of ATBC in the DOTP/ATBC blend was 50 to 75wt%, the low-temperature viscosity property was more excellent.

Describing the low-temperature viscosity change with time, it may be appreciated that as the content of ATBC in the DOPT/ATBC blend was increased, the change with time was decreased. It may be confirmed through the change with time as described above that the case of using the plasticizer in which the content of ATBC in the DOTP/ATBC blend was 37.5 to 87.5wt% was more advantageous than the case of using ATBC or DOTP alone as in Comparative Examples 1 and 2. FIG. 1 is a view comparing freezing properties of plasticizers (DOTP, ATBC, and DOTP/ATBC) in winter. As shown in FIG. 1, at the time of using DOTP along in Comparative Example 1, a freezing phenomenon was most prominently seen, and in Example 1 (DOTP/ATBC 70/10 blend), the plasticizer was slightly frozen. However, in Examples 2 to 7 and Comparative Example 2, the plasticizers were not frozen. Therefore, it may be confirmed that a freezing property of the DOTP may be improved by mixing ATBC. Meanwhile, in producing wall paper, the gelling rate of the resin composition is an important factor for productivity. Since the gelling rate of DOTP was slow, wall paper manufacturers modify a blowing oven so as to further raise a temperature by equipment complementation or decreases a production rate to adjust the blowing, but as shown in Table 1 and FIG. 2, the DOTP/ATBC blend may solve the gelling rate decrease problem of DOTP, and as the content of ATBC is increased, the gelling rate may be further increased, such that the DOTP/ATBC blend may be preferable. UV stability evaluation is to evaluate a degree of discoloration of wall paper at the time of exposing the wall paper to sunlight. When the wall paper is exposed to UV for a long period of time, the wall paper becomes yellow, such that a lifespan of the wall paper may be shortened. As shown in FIG. 3, in Comparative Example 1 using DOTP alone as the plasticizer, UV stability was poor, but as the plasticizer as in Examples 1 to 7, in the case of using the DOTP/ATBC blend, UV stability may be improved. Particularly, in the DOTP/ATBC blend, as the content of the ATBC is increased, an improvement effect may be further increased.

Hereinabove, although the present invention is described by specific matters, exemplary embodiments, and drawings, they are provided only for assisting in the entire understanding of the present invention. Therefore, the present invention is not limited to the exemplary embodiments. Various modifications and changes may be made by those skilled in the art to which the present invention pertains from this description.

## Claims

1. Use of a vinyl chloride based resin composition for wall paper, the vinyl chloride based resin composition comprising:
a vinyl chloride resin, 30 to 120 parts by weight of a mixture of acetyl tributyl citrate and dioctyl terephthalate, based on 100 parts by weight of the vinyl chloride resin, wherein the content of the acetyl tributyl citrate is 50 to 75wt% in the mixture and 0.5 to 5 parts by weight of blowing agent based on 100 parts by weight of the vinyl chloride resin.

2. The use of claim 1, with the vinyl chloride based resin composition further comprising any one or a mixture of two or more compounds selected from a stabilizer, a filler, and titanium dioxide.

3. The use of claim 2, wherein the stabilizer is any one or more selected from the group consisting of Ca-Zn based compounds, K-Zn based compounds, Ba-Zn based compounds, organic tin based compounds, metallic soap based compounds, phenolic compounds, phosphoric acid ester based compounds, or phosphorous acid ester based compounds.

4. The use of claim 1, wherein the blowing agent is any one or more selected from a chemical blowing agent, a physical blowing agent, or a mixture thereof.

5. The use of claim 2, wherein the filler is any one or more selected from the group consisting of calcium carbonate, talc, titanium dioxide, kaolin, silica, alumina, magnesium hydroxide, or clay.

6. The use of claim 1, wherein a low-temperature viscosity (CPS, -20°C) of the resin composition is less than 75,000.

7. The use of claim 1, wherein a low-temperature viscosity change with time of the resin composition is less than 15.

8. A wall paper prepared using the vinyl chloride based resin composition of any one of claims 1 to 7.

## Patentansprüche

1. Verwendung einer auf Vinylchlorid basierenden Harzzusammensetzung für Tapete, wobei die auf Vinylchlorid basierende Harzzusammensetzung aufweist:
ein Vinylchloridharz, 30 bis 120 Gewichtsteile einer Mischung aus Acetyltributylcitrat und Dioctylterephthalat auf Basis von 100 Gewichtsteilen des Vinylchloridharzes, wobei der Gehalt des Acetyltributylcitrats 50 bis 75 Gewichtsprozent in der Mischung, und 0,5 bis 5 Gewichtsteile eines Treibmittels auf Basis von 100 Gewichtsteilen des Vinylchloridharzes beträgt.

2. Verwendung nach Anspruch 1, wobei die auf Vinylchlorid basierende Harzzusammensetzung ferner eine oder eine Mischung aus zwei oder mehr Verbindungen ausgewählt aus einem Stabilisator, einem Füllstoff und Titandioxid aufweist.

3. Verwendung nach Anspruch 2, wobei der Stabilisator eine oder mehr ausgewählt aus der Gruppe bestehend aus Ca-Zn basierten Verbindungen, K-Zn basierten Verbindungen, Ba-Zn-basierten Verbindungen, organischen Zinn-basierten Verbindungen, Metallseife-basierten Verbindungen, Phenolverbindungen, Phosphorsäureester-basierten Verbindungen, oder phosphorigen Säureester-basierten Verbindungen ist.

4. Verwendung nach Anspruch 1, wobei das Treibmittel eines oder mehr ausgewählt aus einem chemischen Treibmittel, einem physikalischen Treibmittel, oder eine Mischung dieser ist.

5. Verwendung nach Anspruch 2, wobei der Füllstoff einer oder mehr ausgewählt aus der Gruppe bestehend aus Kalziumcarbonat, Talk, Titandioxid, Kaolin, Siliziumdioxid, Aluminiumdioxid, Magnesiumhydroxid, oder Ton ist.

6. Verwendung nach Anspruch 1, wobei eine Viskosität bei niedriger Temperatur (CPS, -20 °C) der Harzzusammensetzung weniger als 75 000 beträgt.

7. Verwendung nach Anspruch 1, wobei eine Veränderung der Viskosität bei niedriger Temperatur im Laufe der Zeit der Harzzusammensetzung weniger als 15 beträgt.

8. Tapete, hergestellt unter Verwendung der auf Vinylchlorid basierenden Harzzusammensetzung nach einem der Ansprüche 1 bis 7.

## Revendications

1. Utilisation d'une composition de résine à base de chlorure de vinyle pour papier peint, la composition de résine à base de chlorure de vinyle comprenant :
une résine de chlorure de vinyle, de 30 à 120 parties en poids d'un mélange d'acétylcitrate de tributyle et de téréphtalate de dioctyle, sur la base de 100 parties en poids de la résine de chlorure de vinyle, dans laquelle la teneur en acétylcitrate de tributyle s'étend de 50 à 75 % en poids dans le mélange, et de 0,5 à 5 parties en poids d'agent gonflant sur la base de 100 parties en poids de la résine de chlorure de vinyle.

2. Utilisation selon la revendication 1, la composition de résine à base de chlorure de vinyle comprenant en outre l'un quelconque des composés ou un mélange de deux composés ou plus sélectionnés parmi un stabilisant, une charge et du dioxyde de titane.

3. Utilisation selon la revendication 2, dans laquelle le stabilisant est l'un quelconque ou plusieurs des éléments sélectionnés parmi le groupe consistant en des composés à base de Ca-Zn, des composés à base de K-Zn, des composés à base de Ba-Zn, des composés organo-stanniques, des composés à base de savon métallique, des composés phénoliques, des composés à base d'ester d'acide phosphorique, ou des composés à base d'ester d'acide phosphoreux.

4. Utilisation selon la revendication 1, dans laquelle l'agent gonflant est l'un quelconque ou plusieurs des éléments sélectionnés parmi un agent gonflant chimique un agent gonflant physique, ou un mélange de ceux-ci.

5. Utilisation selon la revendication 2, dans laquelle la charge est l'un quelconque ou plusieurs des éléments sélectionnés parmi le groupe consistant en du carbonate de calcium, du talc, du dioxyde de titane, du kaolin, de la silice, de l'alumine, de l'hydroxyde de magnésium, ou de l'argile.

6. Utilisation selon la revendication 1, dans laquelle une viscosité à basse température (CPS, -20 °C) de la composition de résine est inférieure à 75 000.

7. Utilisation selon la revendication 1, dans laquelle une modification de la viscosité à basse température avec le temps de la composition de résine est inférieure à 15.

8. Papier peint préparé à l'aide de la composition de résine à base de chlorure de vinyle selon l'une quelconque des revendications 1 à 7.
